# EUROPEAN PATENT APPLICATION

(11) **EP 4 803 283 A1**
(43) Date of publication of application: **09.09.2026**
(21) Application number: 24885223.8
(22) Date of filing: 24.06.2024
(51) Int. Cl.: B29C 45/14, B29C 45/16, F16L 9/147

(54) **METHOD FOR PRODUCING RESIN TUBE**

(30) Priority: 30.10.2023 JP 2023185348
(71) Applicant: The Yokohama Rubber Co., Ltd., Hiratsuka-shi, Kanagawa 254-8601 (JP)
(72) Inventor: HOU, Gang, Hiratsuka-shi, Kanagawa 254-8601 (JP); KURIBAYASHI, Nobuaki, Hiratsuka-shi, Kanagawa 254-8601 (JP)
(74) Representative: Grünecker Patent- und Rechtsanwälte PartG mbB
(86) International application number: PCT/JP2024/022827
(87) International publication number: WO 2025/094446

(57) **Abstract**

Provided is a method of manufacturing a resin pipe that provides improved durability and sealing properties of a nipple over which a hose is externally fitted and crimped and can reduce weight of the nipple. One end portion (17a) of the cavity (17) and a one-end-side discharge cavity (17d) is blocked. The cavity (17) is filled with molten resin (R1) injected from the one end portion (17a). Then, a communication passage between the one end portion (17a) and an injector (11) is blocked. The one end portion (17a) and the one-end-side discharge cavity (17d) are brought into communication with each other. An assist material (As) is injected from the other end portion (17d), excess molten resin is discharged from the cavity (17) to the one-end-side discharge cavity (17d), the molten resin (R1) that is left in the cavity (17) and has a cylindrical shape is cured, and a resin pipe (1) is formed. A fitting projection (4b) to be fitted to a notch portion (6a) of a core pipe (5) is formed in the nipple (4). Movement of the core pipe (5) internally fitted to a nipple (4) in an axial direction and a circumferential direction is restricted.

## Description

### Technical Field

The present invention relates to a method of manufacturing a resin pipe and particularly relates to a method of manufacturing a resin pipe capable of reducing weight while providing improved durability and sealing properties by suppressing deformation of a nipple over which a hose is externally fitted and crimped.

### Background Art

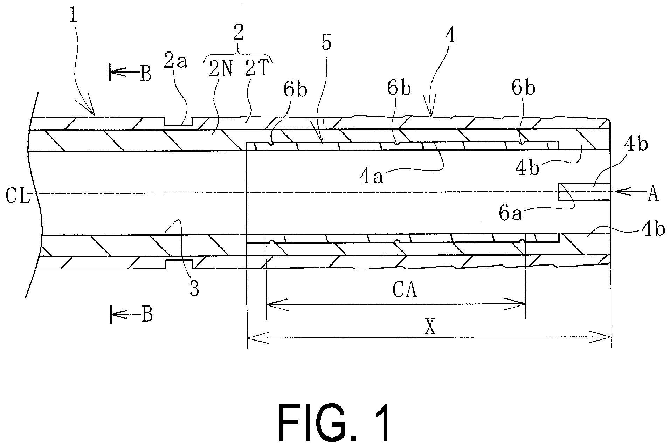

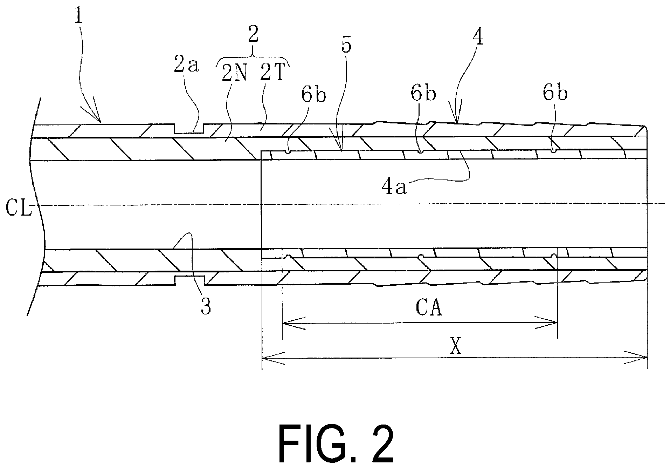

Various structures in which a pipe body is externally fitted and fixed to a nipple are known (for example, see Patent Documents 1 and 2). Patent Document 1 discloses a structure in which a first low-pressure pipe made of resin is externally fitted and fixed to a first cylindrical portion (corresponding to a nipple) made of resin (paragraphs 0020 to 0023, FIG. 2, and the like). Patent Document 2 discloses a structure in which a resin tube is externally fitted and fixed to a press-fit attachment portion (corresponding to a nipple) of a quick connector (paragraph 0013, FIG. 1, and the like).

In recent years, the use of resin pipes instead of metal pipes for weight reduction have been variously considered for pipes used in vehicles such as automobiles. In a resin pipe including a nipple at a tip end portion, a hose is externally fitted and crimped to the nipple. Specifically, after the hose is externally fitted over the nipple, a hose fitting externally fitted over a tip end portion of the hose is crimped, and thus the hose is firmly fixed to the nipple. The resin nipple of the resin pipe has low rigidity as compared with a metal nipple of a metal pipe. Therefore, in a simple resin pipe, the resin nipple is easily deformed when fixing the hose by crimping, which causes a problem of decreases in durability and sealing properties between the hose and the nipple as compared with the nipple of the metal pipe. As a result, there is room for improvement in reducing weight while providing improved durability and sealing properties by suppressing deformation of the nipple over which the hose is externally fitted and crimped.

### Citation List

### Patent Literature

Patent Document 1: JP 6714784 B
Patent Document 2: JP 2004-263729 A

### Summary of Invention

### Technical Problem

An object of the present invention is to provide a method of manufacturing a resin pipe, which can achieve weight reduction while providing improved durability and sealing properties by suppressing deformation of a nipple over which a hose is externally fitted and crimped.

### Solution to Problem

To achieve the object described above, a method of manufacturing a resin pipe according to an embodiment of the present invention is a method of manufacturing a resin pipe including: a nipple over which a hose is externally fitted, the resin pipe having a cylindrical shape,; and a core pipe that is disposed in a predetermined range including an entire length of a crimping range in which the hose is crimped in a longitudinal direction of the nipple, is internally fitted to the nipple, and is made of metal. The core pipe and the nipple each include a restricting portion configured to restrict movement of the core pipe relative to the nipple in an axial direction and a circumferential direction. The resin pipe includes, at its tip end portion in the longitudinal direction, the nipple and the core pipe integrated with each other. The method includes: disposing, in a mold, a cavity having one end portion and the other end portion, extending between the one end portion and the other end portion, and configured to form the resin pipe, a nipple molding portion set in the other end portion, and a one-end-side discharge cavity extending on an outer side of the cavity and configured to communicate with the one end portion, disposing the core pipe in the nipple molding portion, while blocking communication between the one end portion and the one end portion side discharge cavity and closing the mold, injecting molten resin from the one end portion toward the other end portion by an injector, filling the molten resin into the cavity, then blocking a communication passage between the one end portion and the injector, and bringing the one end portion and the one-end-side discharge cavity into communication with each other; and forming the resin pipe with cured resin obtained by curing the molten resin that is left in the cavity and has a cylindrical shape by injecting an assist material from the other end portion toward the one end portion and by discharging excess molten resin from the cavity to the one-end-side discharge cavity, forming the restricting portion of the nipple, restricting movement of the core pipe relative to the nipple in an axial direction and a circumferential direction, and internally fitting the core pipe to the nipple.

### Advantageous Effects of Invention

An embodiment of the present invention can manufacture the resin pipe in which the core pipe made of metal is internally fitted to and integrated with the nipple. In the resin pipe, the core pipe is internally fitted to the nipple in the predetermined range including the entire length of the crimping range in which the hose is crimped in the longitudinal direction of the nipple. Therefore, the rigidity of the crimping range is improved. As a result, even when the hose is crimped to the nipple, deformation of the nipple is suppressed, and thus the durability of the nipple and sealing properties between the hose and the nipple are improved. Since the axial and circumferential movements of the core pipe relative to the nipple are restricted by the restricting portion, the core pipe is stably fixed to the nipple. Therefore, the durability and sealing properties of the nipple are more advantageously improved. Since the core pipe is integrated with the nipple made of resin in the predetermined range in the longitudinal direction, the weight of the resin pipe can be reduced as compared with a case where the entire nipple is made of metal.

### Brief Description of Drawings

FIG. 1 is an explanatory diagram illustrating a resin pipe manufactured according to an embodiment of the present invention in a longitudinal cross-sectional view.
FIG. 2 is an explanatory diagram illustrating a state in which the resin pipe of FIG. 1 is rotated by 45° about the axial center.
FIG. 3 is an explanatory diagram illustrating the resin pipe of FIG. 1 when viewed in the direction of arrow A.
FIG. 4 is an explanatory diagram illustrating the resin pipe of FIG. 1 in a cross-sectional view taken along line B-B.
FIG. 5 is a perspective view of a core pipe of FIG. 1.
FIG. 6 is an explanatory diagram illustrating a state in which the resin pipe and the core pipe of FIG. 1 are separated from each other.
FIG. 7 is a perspective view illustrating a modified example of the core pipe.
FIG. 8 is a perspective view illustrating another modified example of the core pipe.
FIG. 9 is an explanatory diagram illustrating an assembly of the resin pipe and a hose in a longitudinal cross-sectional view.
FIG. 10 is an explanatory diagram illustrating the assembly of FIG. 9 in a cross-sectional view taken along line C-C.
FIG. 11 is an explanatory diagram illustrating a device for manufacturing the resin pipe.
FIG. 12 is an explanatory diagram illustrating a part of one mold of FIG. 11 together with the core pipe and a support pipe in a front view.
FIG. 13 is an explanatory diagram illustrating a state in which the core pipe is arranged in a nipple molding portion of FIG. 12.
FIG. 14 is an explanatory diagram schematically illustrating the inside of a cavity filled with injected molten resin after a mold of FIG. 13 is closed.
FIG. 15 is an explanatory diagram schematically illustrating a state in which an assist material is injected into the cavity of FIG. 14.
FIG. 16 is an explanatory diagram schematically illustrating a state in which the molten resin left in the cavity of FIG. 15 is cured.
FIG. 17 is an explanatory diagram schematically illustrating a state in which the mold of FIG. 16 is opened and then the support pipe is removed.

### Description of Embodiments

A method of manufacturing a resin pipe according to an embodiment of the present invention will be described based on embodiments illustrated in the drawings.

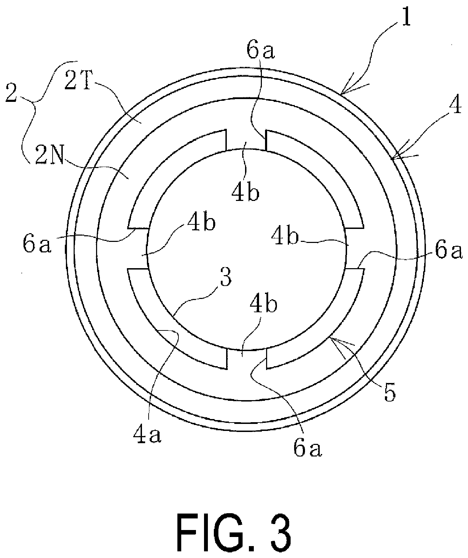

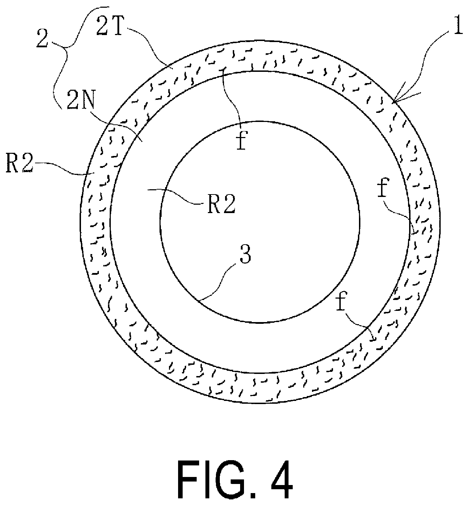

A resin pipe 1 illustrated in FIGS. 1 to 4 is manufactured according to an embodiment of the present invention. The resin pipe 1 includes a nipple 4 made of resin at a tip end portion in a longitudinal direction. A core pipe 5 made of metal is internally fitted to the nipple 4, and the core pipe 5 is integrated with the resin pipe 1. The resin pipe 1 is a cylindrical body including a pipe wall 2 formed by a cured resin R2, and includes a pipe passage 3 extending in the longitudinal direction.

The pipe wall 2 of the resin pipe 1 has a two-layer structure in which a cylindrical inner pipe portion 2N and a cylindrical outer pipe portion 2T are coaxially layered. The inner pipe portion 2N and the outer pipe portion 2T are formed of cured resin R2 having a different specification. The cured resin R2 having a different specification means that the types of resin are different or materials mixed with the resin are different. A dot-dash line CL in the drawing indicates an axial center passing through the cross-sectional center of the pipe passage 3 of the resin pipe 1 and the core pipe 5. The extension direction of the axial center CL is the axial direction (longitudinal direction) of the resin pipe 1 and the core pipe 5.

An inner diameter of the resin pipe 1 is, for example, 4 mm or more and 16 mm or less and is set to a substantially fixed value over the entire length of the pipe. The inner diameter of the resin pipe 1 is substantially the same as an inner diameter of the core pipe 5, and an inner circumferential surface of the resin pipe 1 and an inner circumferential surface of the core pipe 5 are smoothly continuous in the axial direction to form the pipe passage 3. A wall thickness of the pipe wall 2 of the resin pipe 1 is, for example, 1 mm or more and 3 mm or less. A wall thickness of the outer pipe portion 2T is smaller than a wall thickness of the inner pipe portion 2N, and is, for example, 0.5 mm or more and 2.0 mm or less.

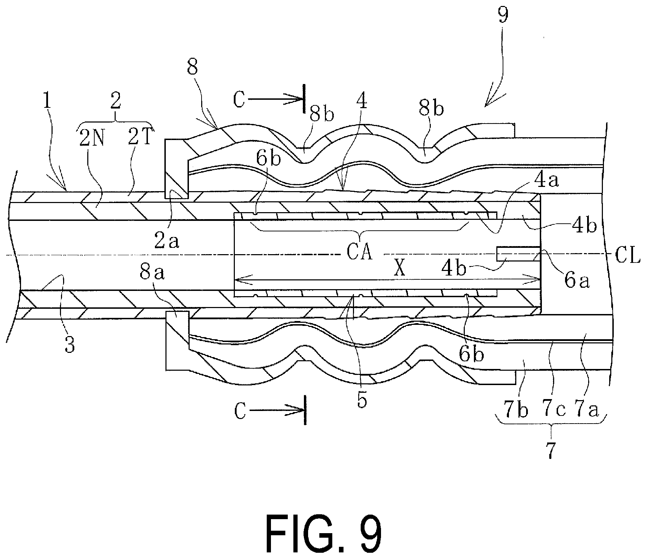

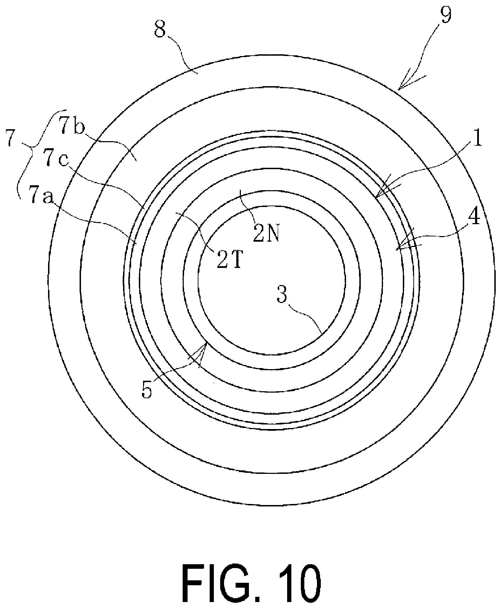

The resin pipe 1 is used as a pipe for various devices, but is used as, for example, a pipe for an air conditioner mounted on a vehicle such as an automobile. The resin pipe 1 is not limited to a straight pipe, and may be a bent pipe depending on the intended use (location of use). As will be described in detail below, a hose 7 externally fitted over the nipple 4 is crimped to be fixedly connected to the nipple 4 as illustrated in FIGS. 9 and 10.

The nipple 4 is a tapered cylindrical body formed to be slightly tapered toward a tip end in the longitudinal direction as a whole. In other words, an outer circumferential surface of the nipple 4 is inclined so as to be slightly tapered toward the tip end in the longitudinal direction. Retaining projections are formed on the tapered outer circumferential surface of the nipple 4 at intervals in the axial direction.

A locking portion 2a is formed on an outer circumferential surface of the resin pipe 1. The locking portion 2a is an annular groove that is continuous over the entire circumference in a circumferential direction. The locking portion 2a is disposed on a rear end side of the core pipe 5 in the axial direction. In other words, the core pipe 5 disposed at the tip end portion of the resin pipe 1 does not extend to the position of the locking portion 2a.

For the resin forming the resin pipe 1, an appropriate type of resin is selected from various known thermoplastic resin that can be injected, depending on the performance or the like required for the resin pipe 1. For example, when manufacturing the resin pipe 1 for an air conditioner mounted on an automobile, polyamide, polypropylene, ABS resin, or the like is used, and nylon resin (nylon 6, nylon 66, nylon 12, nylon 11), polyethylene, polycarbonate, polystyrene, polyoxymethylene, polymethyl methacrylate, polybutylene terephthalate, acryl, polyether ether ketone, thermoplastic polyurethane, polyethylene terephthalate, or polyvinyl chloride is suitable.

The resin pipe 1 can be formed only of thermoplastic resin. However, as reinforcing fibers f, various fibers (for example, glass fibers, carbon fibers, or the like, either short fibers or long fibers are applicable as the material) can be mixed at a predetermined ratio (for example, 30% parts by mass or more and 40% parts by mass or less per 100 parts by mass of the resin). When the reinforcing fibers f are short fibers, the resin pipe is sized to have, for example, an outer diameter of 0.001 mm or more and 1.0 mm or less and a length of 0.01 mm or more and 10 mm or less. In this embodiment, the inner pipe portion 2N and the outer pipe portion 2T are formed of the same cured resin R2; however, the cured resin R2 forming the outer pipe portion 2T is mixed with the reinforcing fibers f, and the cured resin R2 forming the inner pipe portion 2N is not mixed with the reinforcing fibers f.

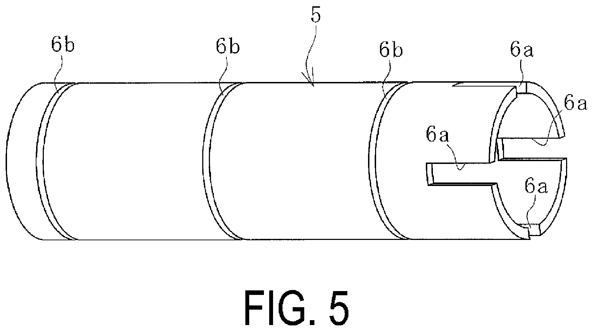

The core pipe 5 illustrated in FIG. 5 is formed of carbon steel, stainless steel, or the like. The inner diameter and an outer diameter of the core pipe 5 are set to be substantially fixed values over the entire length of the pipe. A wall thickness of a pipe wall of the core pipe 5 is, for example, 0.3 mm or more and 1.0 mm or less and is substantially constant over the entire length of the pipe (excluding recessed portions 6b). The length of the core pipe 5 is, for example, 10 mm or more and 80 mm or less. Since it is difficult for the core pipe 5 made of aluminum to secure sufficient rigidity, the core pipe 5 is preferably formed of, for example, a material having tensile strength equal to or higher than that of SS400.

The core pipe 5 includes notch portions 6a at the tip end portion. In the resin pipe 1, four rectangular notch portions 6a are arranged at equal intervals in a circumferential direction. The recessed portions 6b are formed on an outer circumferential surface of the core pipe 5. In this embodiment, a groove having a semi-circular cross-section extends as the recessed portion 6b over the entire circumference in the circumferential direction. The recessed portions 6b each formed of the circumferential groove are formed at a plurality of positions (three positions) spaced apart from each other in the axial direction. A depth of the recessed portion 6b is, for example, about 0.1 mm.

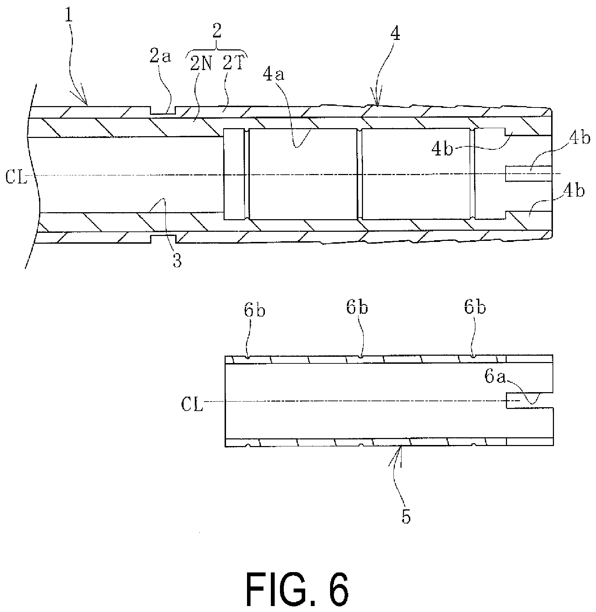

As illustrated in FIG. 6, if the resin pipe 1 and the core pipe 5 are separated from each other, a fitting recess 4a having the same shape as the outer circumferential surface of the core pipe 5 is formed on the inner circumferential surface of the nipple 4. In other words, the inner circumferential surface of the nipple 4 includes the fitting recess 4a having the shape transferred by pressing the outer circumferential surface of the core pipe 5. More specifically, on the inner circumferential surface of the nipple 4, engagement projections 4b to be fitted to the notch portions 6a are formed at positions corresponding to the notch portions 6a of the core pipe 5 and annular minute projections to be fitted to the recessed portions 6b are formed at positions corresponding to the recessed portions 6b. A depth of the fitting recess 4a is substantially the same as the wall thickness of the pipe wall of the core pipe 5. The core pipe 5 is integrated with the resin pipe 1 in a state of being internally fitted to the fitting recess 4a.

Since the core pipe 5 is internally fitted to the fitting recess 4a, movement of the core pipe 5 relative to the nipple 4 in the axial direction is restricted. Since the engagement projections 4b are inserted into and fitted to the notch portions 6a, movement of the core pipe 5 relative to the nipple 4 in the axial direction and the circumferential direction is restricted. Since the minute projections on the inner circumferential surface of the nipple 4 are inserted into and fitted to the recessed portions 6b, movement of the core pipe 5 relative to the nipple 4 in the axial direction is restricted. In this way, the fitting recess 4a, the engagement projections 4b, and the minute projections on the inner circumferential surface of the nipple 4, and the notch portions 6a and the recessed portions 6b of the core pipe 5 each function as a restricting portion that restricts movement of the core pipe 5 relative to the nipple 4 in the axial direction and the circumferential direction. The core pipe 5 is prevented from being displaced relative to the nipple 4 by the restricting portion and is stably fixed at a predetermined position of the nipple 4, and thus the core pipe 5 is prevented from falling off from the resin pipe 1.

The formation of the recessed portions 6b increases the contact area between the outer circumferential surface of the core pipe 5 and the inner circumferential surface of the nipple 4. As a result, it is advantageous for the core pipe 5 to be stably fixed at the predetermined position of the nipple 4.

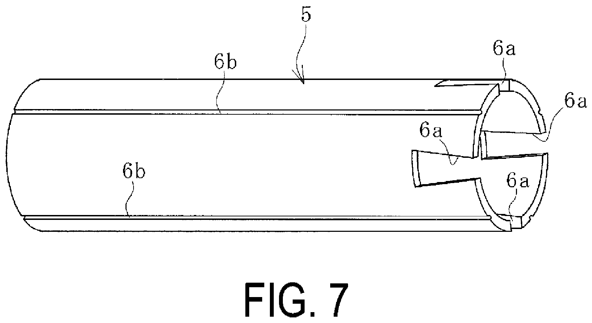

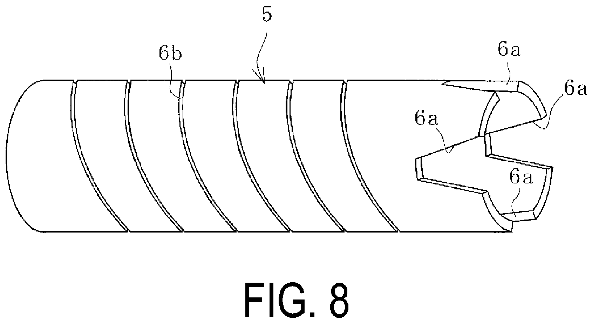

A portion that functions as the restricting portion described above can be formed in various specifications. The shape of the notch portion 6a formed in the core pipe 5 is not limited to a rectangular shape, and various shapes such as a triangular shape, a semicircular shape, and a semi-oval shape can be adopted. A trapezoidal shape that narrows toward the tip of the core pipe 5 such as the notch portion 6a illustrated in FIG. 7, a trapezoidal shape that widens toward the tip of the core pipe 5 such as the notch portion 6a illustrated in FIG. 8, or the like can also be adopted. The number of notch portions 6a may be at least one, and may be any plural number. When a plurality of notch portions 6a are provided, the notch portions 6a may be disposed at equal intervals in the circumferential direction. A plurality of types of notch portions 6a having different shapes and sizes may be disposed mixedly. The fitting projection 4b has a shape corresponding to the shape of the notch portion 6a.

The recessed portion 6b formed of the circumferential groove illustrated in FIG. 5 may be formed at only one position, or the recessed portions 6b may be formed at a plurality of positions spaced apart from each other in the axial direction. As illustrated in FIG. 7, the recessed portions 6b each formed of a linear groove extending parallel to the axial direction of the core pipe 5 can also be adopted. The recessed portion 6b formed of the linear groove may be formed at only one position, or the recessed portions 6b may be formed at a plurality of positions (four positions) spaced apart from each other in the circumferential direction. When the recessed portions 6b formed of a plurality of linear grooves are formed, the recessed portions 6b may be disposed at equal intervals in the circumferential direction.

As illustrated in FIG. 8, the recess 6b formed of a spiral groove helically extending around the axial center CL can also be adopted. The recessed portion 6b illustrated in FIGS. 7 and 8 may be formed over the entire length of the core pipe 5 in the longitudinal direction, or may be formed only in a specific range in the longitudinal direction. The minute projection formed on the inner circumferential surface of the nipple 4 to be fitted to the recessed portion 6b has a shape corresponding to the shape of the recessed portion 6b.

The recessed portion 6b is not limited to an extending groove, and may be a dot-like recess, and recesses as the recessed portions 6b may be scattered on the outer circumferential surface of the core pipe 5. Instead of the recessed portion 6b or in addition to the recessed portion 6b, a protruding portion (an extending projection or a dot-like projection) can also be adopted. In other words, the recessed portions 6b or protruding portions only needs to form an unevenness on the outer circumferential surface of the core pipe 5. The inner circumferential surface of the nipple 4 has a shape corresponding to the unevenness of the outer circumferential surface of the core pipe 5; therefore, the resin of the inner circumferential surface of the nipple 4 is fitted into the recessed portions 6b. As a result, the recessed portion 6b and the resin filling the recessed portion 6b each function as the restricting portion described above.

A plurality of types of recessed portions 6b and protruding portions having different shapes and sizes may be disposed mixedly, and the recessed portion 6b and the protruding portion can be formed in combination with the desired notch portion 6a. The recessed portion 6b and the protruding portion can be provided discretionally, and the outer circumferential surface of the core pipe 5 can be a smooth surface without a minute unevenness, and only the fitting projection 4b and the notch portion 6a can also function as the restricting portions described above.

The core pipe 5 is disposed in a predetermined range X including the entire length of a crimping range CA in which the hose 7 is crimped in the longitudinal direction of the nipple 4. In other words, the core pipe 5 is disposed so as to cover at least the crimping range CA. The crimping range CA is a range in which crimping force when crimping the hose 7 to the nipple 4 substantially acts. The outer diameters of the nipple 4 before and after the hose 7 is crimped are compared, and a position (range) in which there is a difference between the outer diameters can be determined to be the crimping range CA, and a position (range) where there is no difference between the outer diameters can be determined to be a position outside the crimping range CA. In general, the crimping force does not act on a range of 5 mm or more and 20 mm or less from the tip position of the nipple 4 (the resin pipe 1) in the axial direction; therefore, this range is outside the crimping range CA.

In the resin pipe 1, the tip position of the core pipe 5 coincides with the tip position of the resin pipe 1, and the rear end position of the core pipe 5 is located rearward of the rear end position of the crimping range CA by about 5 mm. The tip position of the core pipe 5 can be slightly retracted from the tip position of the resin pipe 1; however, the resin pipe 1 can be easily manufactured by setting the tip positions of the core pipe 5 and the resin pipe 1 to coincide with each other. The rear end position of the core pipe 5 can be substantially matched with the rear end position of the crimping range CA for weight reduction.

The notch portion 6a is disposed outside the crimping range CA. In the resin pipe 1, the tip position of the notch portion 6a coincides with the tip position of the resin pipe 1, and the rear end position of the notch portion 6a is located forward of the rear end position of the crimping range CA by about 5 mm. The rear end position of the notch portion 6a can be substantially matched with the tip position of the crimping range CA for weight reduction.

In an assembly 9 of the resin pipe 1 and the hose 7 illustrated in FIGS. 9 and 10, the hose 7 is externally fitted and crimped over the nipple 4 of the resin pipe 1 described above. The core pipe 5 includes the notch portions 6a at the tip portion, and the notch portions 6a are disposed outside the crimping range CA in the longitudinal direction of the nipple 4. A rubber hose, a resin hose, or the like in which a reinforcing layer 7c formed of a reinforcing wire is coaxially layered between an inner surface layer 7a and an outer surface layer 7b is used as the hose 7.

As the structure of the assembly 9 is described in detail, the hose 7 externally fitted over the nipple 4 is covered by a cylindrical hose fitting 8. An annular locking portion 8a protrudes toward the inner circumferential side at one end portion of the hose fitting 8, and the locking portion 8a is locked to the locking portion 2a formed on the outer circumferential surface of the resin pipe 1. An outer circumferential surface (a pressing portion 8b) of the hose fitting 8 is strongly pressed by a crimping jig, and thus the hose 7 is deformed toward the nipple 4 (the axial center CL) together with the hose fitting 8 and the hose 7 is crimped to the nipple 4.

In order to manufacture the assembly 9, the locking portion 8a of the hose fitting 8 is locked to the locking portion 2a of the resin pipe 1, and the hose fitting 8 is attached so as to cover the outer circumferential surface of the nipple 4 with a gap between the outer circumferential surface of the nipple 4 and the hose fitting 8. The nipple 4 is inserted into one end portion of the hose 7, and the one end portion of the hose 7 is pushed into the gap between the nipple 4 and the hose fitting 8. Next, the outer circumferential surface of the hose fitting 8 is strongly pressed toward the axial center CL by the crimping jig. Thus, the hose 7 is deformed toward the nipple 4 (the axial center CL) together with the hose fitting 8, and the hose 7 is crimped and coupled to the nipple 4. Various known types of hose fitting and crimping jig may be used as the hose fitting 8 and the crimping jig.

The crimping force when crimping the hose 7 to the nipple 4 acts on the crimping range CA. Since the core pipe 5 is internally fitted to the nipple 4 in the predetermined range X including the entire length of the crimping range CA, the rigidity of the crimping range CA of the nipple 4 is improved. Therefore, deformation of the nipple 4 over which the hose 7 is crimped is suppressed as compared with a resin nipple. Accordingly, damage of the nipple 4 when crimping the hose 7 is avoided, and the durability of the nipple 4 is improved because deformation and damage over time are advantageously suppressed. Therefore, the durability of the nipple 4 is improved. In other words, the hose 7 can be fixed to the nipple 4 with stronger crimping force than that of the resin nipple; therefore, sealing properties between the hose 7 and the nipple 4 are improved. As a result, the hose 7 is stably fixed to the nipple 4 for a long period of time, which is advantageous in maintaining good sealing properties between the hose 7 and the nipple 4.

Since the axial and circumferential movements of the core pipe 5 relative to the nipple 4 are restricted by the restricting portion described above, the core pipe 5 is stably fixed to the nipple 4. Therefore, the durability and sealing properties of the nipple 4 are more advantageously improved. Since the core pipe 5 is integrated with the resin nipple 4 in the predetermined range X in the longitudinal direction, the weight reduction of the nipple 4 can be achieved as compared with a case where the entire nipple 4 is made of metal.

In the resin pipe 1 described above, the notch portions 6a are formed at the tip portion of the core pipe 5 and are disposed outside the crimping range CA. In other words, the range where the notch portions 6a are formed is not a portion necessary for suppressing the deformation of the nipple 4 due to the crimping force. Therefore, the core pipe 5 can be prevented from falling off from the nipple 4 while achieving the weight reduction of the core pipe 5 without impairing the effect of suppressing the deformation of the nipple 4.

Further, since the resin pipe 1 has a two-layer structure of the inner pipe portion 2N and the outer pipe portion 2T, the inner pipe portion 2N can have specifications more suitable for the fluid flowing through the pipe passage 3, and the outer pipe portion 2T can have specifications having improved weather resistance, shock resistance, and the like. In this embodiment, the shock resistance is improved by mixing the reinforcing fibers f only in the outer pipe portion 2T. In addition, since the reinforcing fibers f are not mixed in the inner pipe portion 2N, the reinforcing fibers f can be prevented from falling off for some reason and being mixed in the fluid flowing through the pipe passage 3.

An example of a procedure for manufacturing the resin pipe 1 will be described below.

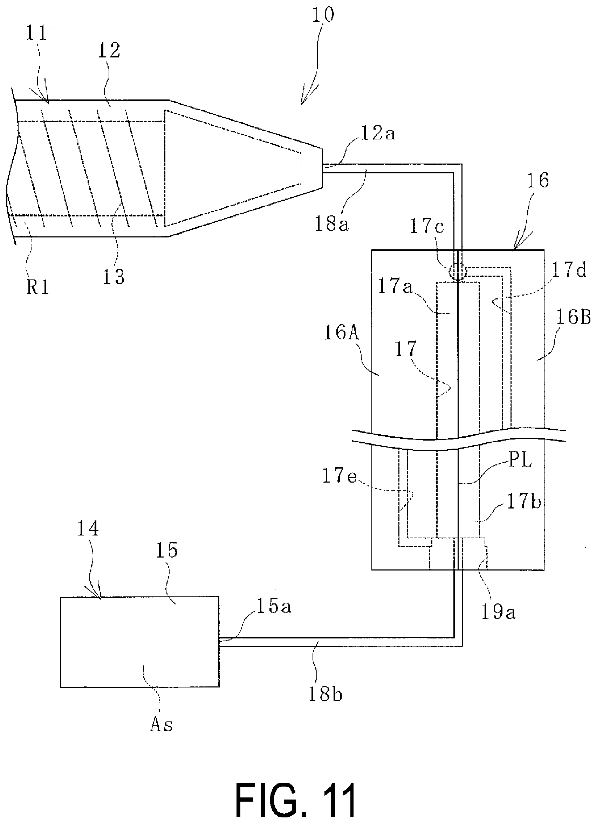

The resin pipe 1 is manufactured using a manufacturing device 10 illustrated in FIG. 11. The manufacturing device 10 includes an injector 11, an assist material injection device 14, and a mold 16. In this embodiment, a pair of left and right molds 16 are used.

The injector 11 includes a cylinder 12 and a screw 13 provided inside the cylinder 12. The injector 11 is not limited to the type illustrated in the drawing, and various known resin injection molding machines such as a pre-plasticizing type can be used. An injection path 18a is connected to an injection outlet 12a at a tip of the cylinder 12. The injection path 18a is connected to the mold 16. The resin to be used is heated inside the cylinder 12 to become a molten resin R1, and the molten resin R1 is injected from the injection outlet 12a through the injection path 18a toward the inside of the mold 16 by the rotating screw 13.

The assist material injection device 14 includes a storage portion 15 in which gas used as an assist material As is stored. As the assist material injection device 14, various known injection devices can be used. As the assist material As, gas such as nitrogen gas or air is used.

An introduction path 18b is connected to an inlet 15a at a tip of the storage portion 15. The introduction path 18b is connected to the mold 16. The assist material As is injected from the inlet 15a through the introduction path 18b toward the inside of the mold 16 at a predetermined pressure. For example, gas, for example, at room temperature (20°C ± 15°C) is injected as the assist material As.

The mold 16 is constituted of one mold 16A and the other mold 16B assembled to each other. The molds 16A and 16B are contacted and separated with a parting line PL as a boundary. In this embodiment, the mold is not limited to the two-piece mold 16, and various other known types of molds 16 can be used.

A cavity 17 that is a hollow cavity is formed in the mold 16. The cavity 17 extends in a line from one end portion 17a to the other end portion 17b, and is non-annular. The outer shape of the cavity 17 is the same as that of the resin pipe 1 to be manufactured. In this embodiment, the cavity 17 extends vertically between the upper one end portion 17a and the lower other end portion 17b, and a pair of left and right molds 16A and 16B are adopted.

The injection outlet 12a is connected to the one end portion 17a of the cavity 17 via the injection path 18a, and the inlet 15a is connected to the other end portion 17b via the introduction path 18b. The injection outlet 12a only needs to be indirectly connected to the one end portion 17a of the cavity 17, and the inlet 15a only needs to be indirectly connected to the other end portion 17b of the cavity 17.

Further, a one-end-side discharge cavity 17d extending on the outer side of the cavity 17 and communicable with the one end portion 17a of the cavity 17, and an other-end-side discharge cavity 17e extending on the outer side of the cavity 17 and communicating with the other end portion 17b of the cavity 17 are formed in the mold 16. A switching unit 17c is installed in a communication path (the injection path 18a) between the one end portion 17a and the injector 11. The one-end-side discharge cavity 17d is connected to the switching unit 17c. A mode in which the one end portion 17a and the injection path 18a are communicated with each other and the communication between the one end portion 17a and the one-end-side discharge cavity 17d is blocked and a mode in which the communication between the one end portion 17a and the injection path 18a is blocked and the one end portion 17a and the one-end-side discharge cavity 17d are communicated with each other can be switched by operating the switching unit 17c.

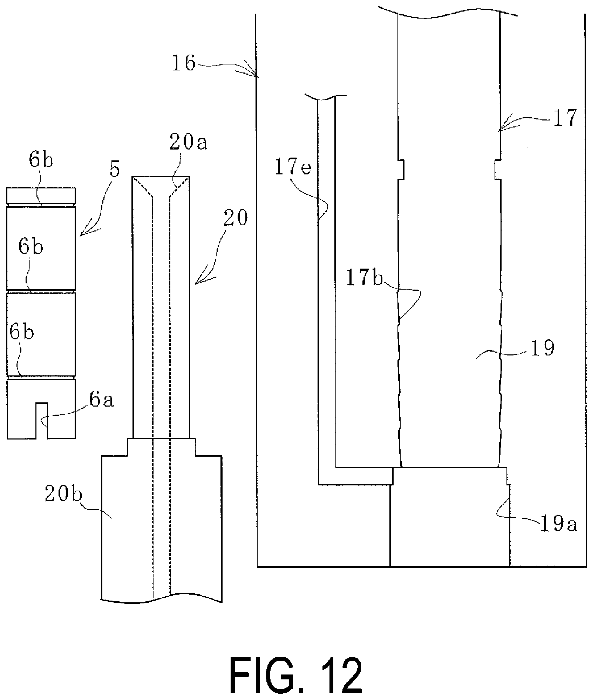

As illustrated in FIG. 12, a nipple molding portion 19 is set in the other end portion 17b of the cavity 17. A pipe fixing portion 19a is disposed consecutively with the nipple molding portion 19. A support pipe 20 is used to dispose the core pipe 5 in the nipple molding portion 19.

The support pipe 20 includes a cylindrical body having an opening 20a at a tip end portion, and a base portion 20b connected to a lower end portion of the cylindrical body and having a larger diameter. The core pipe 5 is inserted into the cylindrical body, and since an outer diameter of the cylindrical body is set to be slightly smaller than and almost the same as the inner diameter of the core pipe 5, the core pipe 5 is externally fitted to the cylindrical body substantially without a gap. A flow path continuous to the introduction path 18b extends through the support pipe 20, and a tip of the flow path becomes the opening 20a. Thus, the opening 20a becomes an outlet of the introduction path 18b. The pipe fixing portion 19a is formed in a recess having a shape to which the base portion 20b is fitted.

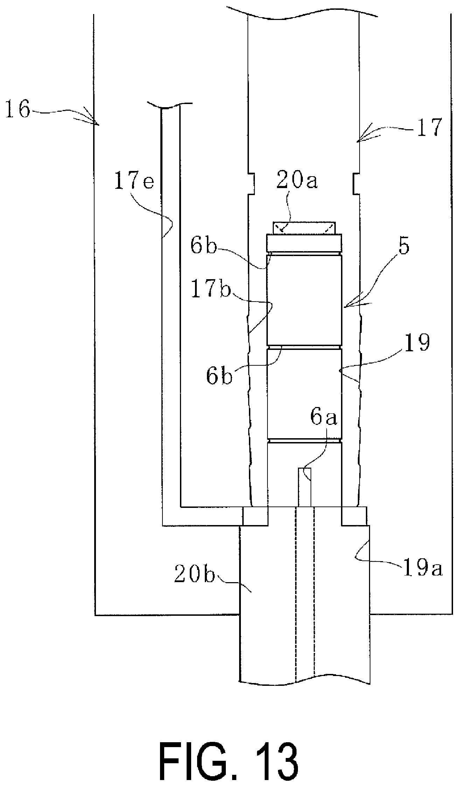

As illustrated in FIG. 13, when manufacturing the resin pipe 1, the core pipe 5 is disposed in the nipple molding portion 19 in a state where the mold 16 is opened. In other words, the base portion 20b of the support pipe 20 to which the core pipe 5 is externally fitted is fitted to the pipe fixing portion 19a, and the outer circumferential surface of the core pipe 5 and an inner circumferential surface of the nipple molding portion 19 are disposed with a gap therebetween. The core pipe 5 is placed on the base portion 20b in a state where the lower end in which the notch portions 6a are formed is brought in contact with the base portion 20b. In this embodiment, the opening 20a protrudes upward from an upper end of the core pipe 5, but may be located at the same position as the upper end or located slightly below the upper end.

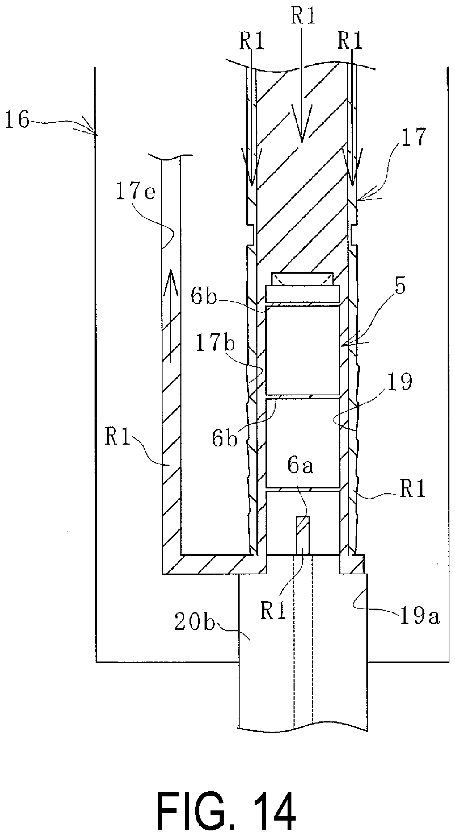

Next, the mold 16A and the mold 16B are assembled to each other and closed; thereafter, as illustrated in FIG. 14, the molten resin R1 is injected by the injector 11 into the cavity 17 of the mold 16 that is closed. In this embodiment, the molten resin R1 mixed with the reinforcing fibers f (molten resin R1 for an outer pipe configured to form the outer pipe portion 2T) and the molten resin R1 not mixed with the reinforcing fibers f (molten resin R1 for an inner pipe configured to form the inner pipe portion 2N) are injected from the injector 11. Each kind of injected molten resin R1 is injected from the injection outlet 12a via the injection path 18a into the cavity 17.

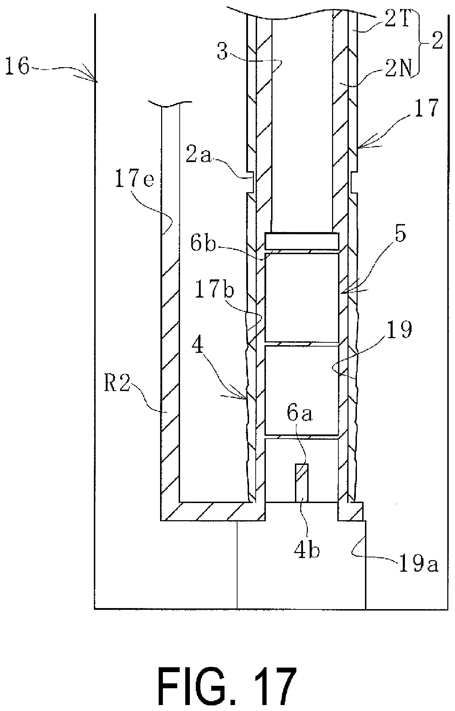

Specifically, the switching unit 17c is operated to establish communication between the one end portion 17a and the injection path 18a and block communication between the one end portion 17a and the one-end-side discharge cavity 17d. In this state, the outer resin R1 for an outer pipe is injected from the one end portion 17a toward the other end portion 17b to fill the cavity 17 in a cylindrical shape, and the inner resin R1 for an inner pipe is injected from the one end portion 17a toward the other end portion 17b of the cavity 17 to fill the inner circumferential side of the cylindrical molten resin for an outer pipe in a columnar shape. In the nipple molding portion 19, the molten resin R1 for an outer pipe and the molten resin R1 for an inner pipe are filled and layered in the cylindrical gap between the inner circumferential surface of the nipple molding portion 19 and the outer circumferential surface of the core pipe 5. The molten resin R1 for an inner pipe enters and fills the notch portions 6a and the recessed portions 6b. The excess molten resin R1 is discharged to the other-end-side discharge cavity 17e. In FIGS. 14 to 17, the reinforcing fibers f mixed in the molten resin R1 for an outer pipe are not illustrated.

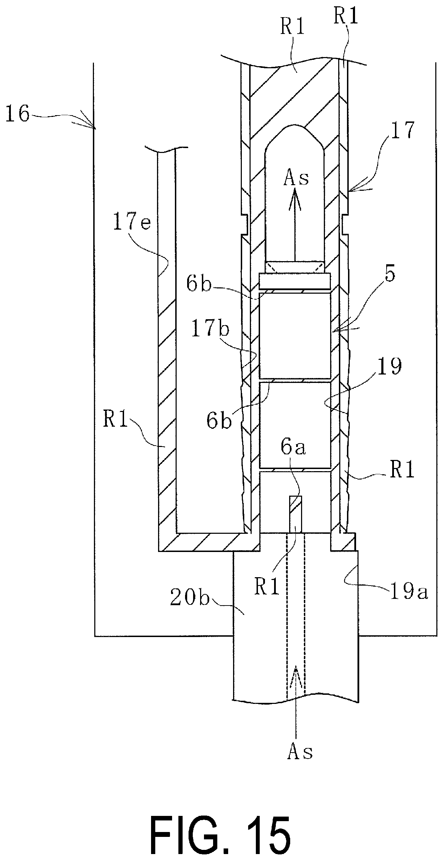

Next, as illustrated in FIG. 15, the assist material (gas) As is injected into the mold 16 by the assist material injection device 14. More specifically, the switching unit 17c is operated to block the communication between the one end portion 17a and the injection path 18a and bring the one end portion 17a and the one-end-side discharge cavity 17d into communication with each other. In this state, the assist material As is injected at a predetermined pressure from the other end portion 17b via the opening 20a toward the one end portion 17a of the cavity 17 filled with the molten resin R1. In this way, the assist material (gas) As is injected into the cavity 17 in a direction opposite to the injection direction of the molten resin R1. The injected assist material As passes through the inside of the cavity 17 along the extending direction of the cavity 17.

When the assist material As passes through the inside of the cavity 17, the excess molten resin R1 (mainly, the molten resin R1 for an inner pipe) is discharged from the one end portion 17a of the cavity 17, and the molten resin R1 for an inner pipe remains in a cylindrical shape in the cavity 17. The molten resin R1 for an outer pipe remains in a cylindrical shape in the cavity 17. In the nipple molding portion 19, the molten resin R1 for an outer pipe and the molten resin R1 for an inner pipe that are filled in the gap (cylindrical gap) between the inner circumferential surface of the nipple molding portion 19 and the outer circumferential surface of the core pipe 5 remain in the layered state. The molten resin R1 for an inner pipe that has entered and filled the notch portions 6a and the recessed portions 6b also remains.

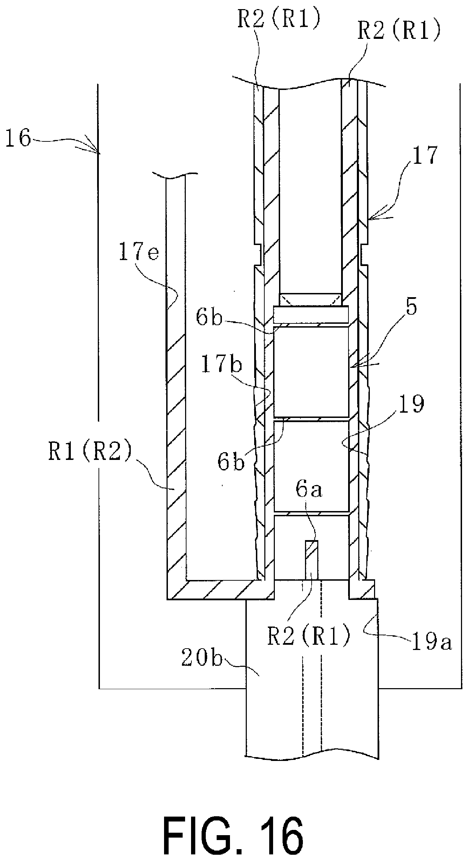

As illustrated in FIG. 16, the remaining molten resin R1 is cured inside the cavity 17 to become the cured resin R2, and thus the resin pipe 1 is formed. In other words, the molten resin R1 for an inner pipe is cured to form the inner pipe portion 2N, the molten resin R1 for an outer pipe is cured to form the outer pipe portion 2T and become the pipe wall 2, and the hollow portion becomes the pipe passage 3. The molten resin R1 filled in the gap (cylindrical gap) between the inner circumferential surface of the nipple molding portion 19 and the outer circumferential surface of the core pipe 5 becomes the cured resin R2, and the nipple 4 and the fitting recess 4a are formed. The molten resin R1 filled in the notch portions 6a becomes the cured resin R2 to form the fitting projections 4b, and the molten resin R1 filled in the recessed portions 6b becomes the cured resin R2 to form the annular minute projections. At this stage, useless portions of the cured resin R2 (the resin discharged to the one-end-side discharge cavity 17d and the other-end-side discharge cavity 17e) extend at both end portions of the resin pipe 1 to be integrated.

Next, the mold 16 is opened by separating the mold 16A and the mold 16B at the parting line PL, and the support pipe 20 is removed from the mold 16 as illustrated in FIG. 18. The formed resin pipe 1 is taken out together with the useless portions of the cured resin R2. The resin pipe 1 in which the core pipe 5 is integrated with the nipple 4 illustrated in FIGS. 1 to 4 is manufactured by cutting off the useless portions of the cured resin R2 from the taken out resin pipe 1.

In this embodiment, the excess molten resin R1 is discharged to the one-end-side discharge cavity 17d and the other-end-side discharge cavity 17e that are connected to the cavity 17. Accordingly, the molten resin R1 (the molten resin R1 for an inner pipe and the molten resin R1 for an outer pipe) is stably layered on the one end portion 17a and the other end portion 17b of the cavity 17 without shortage, which is advantageous in manufacturing the resin pipe 1 in which the thicknesses of the inner pipe portion 2N and the outer pipe portion 2T are within the reference range.

According to the assembly 9, the nipple 4 and the hose 7 can be firmly and stably connected to each other with the improvement of the durability of the resin pipe 1, and thus excellent sealing properties between the nipple 4 and the hose 7 is advantageously maintained for a long period of time. The weight reduction of the assembly 9 is achieved with the weight reduction of the resin pipe 1.

The injection temperature of the molten resin R1 is generally set in the range of, for example, 150°C or higher and 350°C or lower. The temperature of the mold 16 (the cavity 17) is generally set in the range of, for example, 30°C or higher and 120°C or lower. Therefore, the injection temperature of the molten resin R1 and the temperature of the mold 16 (the cavity 17) are appropriately determined within the foregoing ranges, and the viscosity of the molten resin R1 in the cavity 17 is controlled to be within a desired range. In other words, in order to set the molten resin R1 in the cavity 17 to an appropriate viscosity, the temperature of the molten resin R1 injected into the cavity 17 and the temperature of the mold 16 (the cavity 17) are set to desired ranges.

Appropriate injection pressure of the assist material (gas) As varies depending on the length and shape of the resin pipe 1 (the cavity 17), the viscosity of the molten resin R1 in the cavity 17, and the like and thus cannot be set uniformly and comprehensively. Accordingly, in order to set the viscosity of the molten resin R1 in the cavity 17 to a desired range, the temperature of the molten resin R1 injected into the cavity 17 and the temperature of the mold 16 (the cavity 17) are set to desired ranges within the ranges described above. Under the temperature conditions set in this manner, test forming is performed at a plurality of injection pressures of the assist material As set differently, and samples of the resin pipe 1 are manufactured. The injection pressure at which the wall thickness of the pipe wall 2 of the sample of the resin pipe 1 manufactured by each test forming falls within the reference range (for example, 1.5 mm or more and 1.75 mm or less) is grasped, and the grasped injection pressure is preferably set as the appropriate injection pressure of the assist material As. In actual manufacturing of the resin pipe 1, the temperature of the molten resin R1 is set to the condition set in the test forming, and the assist material As is injected into the cavity 17 at the set appropriate injection pressure to manufacture the resin pipe 1.

In this embodiment, gas is adopted as the assist material As, but liquid such as water, and a solid such as a metal ball and a resin ball can be used as the assist material As. A known appropriate mechanism is adopted as the assist gas injection device 14 depending on the type of assist material As.

In the course of allowing the gas assist material As to pass through the cavity 17 filled with the molten resin R1, the temperature of the molten resin R1 brought in contact with the gas can be prevented from rapidly decreasing as compared with a case where the solid or liquid assist material As is used. The molten resin R1 does not adhere to the gas assist material As as in the case of the solid assist material As. Therefore, when the resin pipe 1 is formed using gas as the assist material As, variations in the wall thickness of the pipe wall 2 are advantageously reduced over the entire length of the pipe even if the pipe length is long.

In the embodiment described above, a case where the pipe wall 2 has a two-layer structure of the inner pipe portion 2N and the outer pipe portion 2T is described as an example, but an embodiment of the present invention can be applied to a case where the resin pipe 1 in which the pipe wall 2 has one layer structure is manufactured. In the case of manufacturing such a resin pipe 1, the foregoing procedure is applied on the assumption that the inner pipe portion 2N and the outer pipe portion 2T are formed of the same resin. In the case where the pipe wall 2 has one layer structure, the other-end-side discharge cavity 17e can be omitted.

### Reference Signs List

1 Resin pipe
2 Pipe wall
2N Inner pipe portion
2T Outer pipe portion
2a Locking portion
3 Pipe passage
4 Nipple
4a Fitting recess (restricting portion)
4b Fitting projection (restricting portion)
5 Core pipe
6a Notch portion (restricting portion)
6b Recessed portion (restricting portion)
7 Hose
7a Inner surface layer
7b Outer surface layer
7c Reinforcing layer
8 Hose fitting
8a Locking portion
8b Pressing portion
9 Assembly
10 Manufacturing device of resin pipe
11 Injector
12 Cylinder
12a Injection outlet
13 Screw
14 Assist material injection device
15 Storage portion
15a Inlet
16 (16A, 16B) Mold
17 Cavity
17a One end portion
17b Other end portion
17c Switching unit
17d One-end-side discharge cavity
17e Other-end-side discharge cavity
18a Injection path
18b Introduction path
19 Nipple molding portion
19a Pipe fixing portion
20 Support pipe
20a Opening
20b Base portion
PL Parting line
R1 Molten resin
R2 Cured resin
As Assist material
f Reinforcing fibers

## Claims

1. A method of manufacturing a resin pipe, the resin pipe comprising:
a nipple over which a hose is externally fitted, the nipple having a cylindrical shape; and
a core pipe that is disposed in a predetermined range including an entire length of a crimping range in which the hose is crimped in a longitudinal direction of the nipple, is internally fitted to the nipple, and is made of metal,
the core pipe and the nipple each comprising a restricting portion configured to restrict movement of the core pipe relative to the nipple in an axial direction and a circumferential direction,
the resin pipe comprising, at its tip end portion in the longitudinal direction, the nipple and the core pipe integrated with each other,
the method comprising:
disposing, in a mold, a cavity having one end portion and the other end portion, extending between the one end portion and the other end portion, and configured to form the resin pipe, a nipple molding portion set in the other end portion, and a one-end-side discharge cavity extending on an outer side of the cavity and configured to communicate with the one end portion;
disposing the core pipe in the nipple molding portion, while blocking communication between the one end portion and the one-end-side discharge cavity and closing the mold, injecting molten resin from the one end portion toward the other end portion by an injector, filling the molten resin into the cavity; then blocking a communication passage between the one end portion and the injector, and bringing the one end portion and the one-end-side discharge cavity into communication with each other; and
forming the resin pipe with cured resin obtained by curing the molten resin that is left in the cavity and has a cylindrical shape by injecting an assist material from the other end portion toward the one end portion and by discharging excess molten resin from the cavity to the one-end-side discharge cavity, forming the restricting portion of the nipple, restricting movement of the core pipe relative to the nipple in an axial direction and a circumferential direction, and internally fitting the core pipe to the nipple.

2. The method of manufacturing a resin pipe according to claim 1, wherein
the core pipe comprises a notch portion at its tip end portion,
the notch portion is disposed outside the crimping range in the longitudinal direction of the nipple, and
cured resin obtained by allowing a part of the molten resin to fill the notch portion and cure and the notch portion constitute the restricting portion.

3. The method of manufacturing a resin pipe according to claim 1 or 2, wherein
the core pipe forms an unevenness on its outer circumferential surface, cured resin obtained by allowing a part of the molten resin to fill a recessed portion of the unevenness and cure and the recessed portion constitute the restricting portion.

4. The method of manufacturing a resin pipe according to any one of claims 1 to 3, wherein
the resin pipe has a two-layer structure in which an inner pipe portion and an outer pipe portion that are formed of cured resin having a different specification are coaxially layered,
the method comprises:
disposing, in the mold, an other-end-side discharge cavity that extends on the outer side of the cavity and communicates with the other end portion;
injecting, as the molten resin, molten resin for an outer pipe configured to form the outer pipe portion and molten resin for an inner pipe configured to form the inner pipe portion into the cavity; filling the cavity with the molten resin for an outer pipe in a cylindrical shape and filling an inner circumferential side of the molten resin for an outer pipe having a cylindrical shape with the molten resin for an inner pipe in a cylindrical shape; and discharging excess molten resin to the other-end-side discharge cavity; and
injecting an assist material from the other end portion toward the one end portion, discharging the excess molten resin from the cavity to the one-end-side discharge cavity, thereby curing the molten resin having a cylindrical shape that is left in the cavity and forming the resin pipe.

5. The method of manufacturing a resin pipe according to claim 4, wherein only the molten resin for an outer pipe of the molten resin contains reinforcing short fibers.

6. The method of manufacturing a resin pipe according to any one of claims 1 to 5, wherein gas is used as the assist material.
